(19) Europäisches Patentamt
European Patent Office
Office européen des brevets

(11) **EP 2 903 874 B1**

(12) **EUROPEAN PATENT SPECIFICATION**

(45) Date of publication and mention of the grant of the patent:
**11.05.2022 Bulletin 2022/19**

(21) Application number: **13843077.2**

(22) Date of filing: **01.10.2013**

(51) International Patent Classification (IPC):
**B60W 10/18** (2012.01)  **B60W 10/08** (2006.01)
**B60W 10/196** (2012.01)  **B60W 20/00** (2016.01)
**B60W 30/16** (2020.01)  **B60W 30/18** (2012.01)

(52) Cooperative Patent Classification (CPC):
**B60W 10/08; B60W 10/18; B60W 20/00;**
**B60W 30/18127;** B60W 30/16; B60W 2530/10;
B60W 2530/16; B60W 2540/10; B60W 2552/15;
B60W 2554/801

(86) International application number:
**PCT/SE2013/051136**

(87) International publication number:
**WO 2014/055014 (10.04.2014 Gazette 2014/15)**

(54) **DEVICE AND METHOD FOR COMFORTABLE AND/OR FUEL SAVING DRIVING OF A MOTOR VEHICLE**

VORRICHTUNG UND VERFAHREN ZUM KOMFORTABLEN UND/ODER KRAFTSTOFFSPARENDEN FAHREN EINES KRAFTFAHRZEUGS

DISPOSITIF ET PROCÉDÉ DE CONDUITE CONFORTABLE ET/OU ÉCONOMIQUE EN CARBURANT D'UN VÉHICULE À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2012 SE 1251110**
**23.07.2013 SE 1350911**

(43) Date of publication of application:
**12.08.2015 Bulletin 2015/33**

(73) Proprietor: **Scania CV AB**
**151 87 Södertälje (SE)**

(72) Inventor: **FALKHÄLL, Johan**
**S-151 48 Södertälje (SE)**

(74) Representative: **Scania CV AB**
**Patents, GP 117kv**
**151 87 Södertälje (SE)**

(56) References cited:
**EP-A1- 0 754 588**  **EP-A2- 0 903 258**
**DE-A1- 19 718 709**  **US-A- 5 915 801**
**US-A1- 2008 300 762**  **US-B2- 7 668 638**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD OF THE INVENTION

The present invention concerns a method for comfortable and/or fuel-efficient driving of a motor vehicle equipped with a regenerative braking system. The invention also concerns a computer program product for a computer for implementing a method according to the invention. The invention further concerns a device for comfortable and/or fuel-efficient forward travel of a motor vehicle and a motor vehicle that is equipped with the device.

### BACKGROUND

Various types of vehicles that are equipped with a regenerative braking system currently exist. Regenerative braking systems are common in so-called hybrid vehicles. Said hybrid vehicles can comprise, for example, a car, bus or goods vehicle.

By using a regenerative braking system, the vehicle can be braked by transferring energy from a driveline to a battery. The braking torque can thus be applied to the driveline by means of an electric machine, whereupon braking energy can be stored in said battery.

Functions of vehicles equipped with a regenerative braking system currently exist wherein a braking torque is applied to the driveline of the vehicle when the vehicle is being driven at low velocities, e.g. below 50 km/h, and when the gas pedal is completely undepressed. Said braking torque can be on the order of magnitude of 100 Nm at an input shaft of a gearbox in a goods vehicle of normal performance. The need for the driver to use the gas pedal and brake pedal in alternating fashion to achieve the desired forward travel of the vehicle is thereby reduced. A driver can thus drive the vehicle for a greater distance using just the gas pedal.

These functions are based on the assumption that if the vehicle is being driven at relatively low velocities, then the probability is higher that the vehicle is in traffic situations in which it is advantageous to use regenerative braking, since more forceful braking could be imminent.

However, there are many different traffic situations and operating conditions, including when the vehicle is being driven at low velocities, in which it is not always optimal to actively apply a braking torque to the vehicle driveline at low velocities. Examples of such traffic situations and operating conditions can occur in sparse traffic or when driving uphill. In many different traffic situations it is desirable to allow the vehicle to roll in order to optimize fuel consumption. Such rolling can including rolling with active motor braking, or so-called "free-rolling/free-wheeling."

Safety functions are also currently present in vehicles that take into account how rapidly a driver releases the gas pedal while driving the vehicle. The magnitude of a braking torque that is applied to the vehicle driveline can thus be determined based on the rate of change in the position of the gas pedal. Such a safety function is described in US 8027773.

US 6378636 describes a method for applying a braking torque in a hybrid vehicle when the gas pedal is undepressed and the vehicle is being propelled solely by an electric motor.

EP0903258 discloses a method and system for extending the regenerative range taking into account pumping losses in the engine. The applied regenerative torque is determined based on e.g. the temperature of a protective circuit and the capacity of an ultraprocessor.

EP0754588 relates to a regenerative brake controller for controlling value of regenerative braking torque simulating engine. When the shift lever is in the D range (102), from a first control map which correlates the vehicle speed and the like with target braking torque or target deceleration, the controller reads the target braking torque or target deceleration corresponding to the vehicle speed immediately before the release of the accelerator pedal (104), and controls the vehicle components on the basis of the read target braking torque or target deceleration such that the regenerative braking torque corresponding to the engine braking torque is produced (106). When the shift lever is in the engine braking range (108), the controller detects the shift lever position in this range (110), determines the target braking torque or target deceleration by referring to the map, and on the basis of the vehicle speed and the like immediately before the release of the accelerator pedal and the shift lever position with the engine braking range (112), and controls the vehicle components according to the determined target braking torque or target deceleration such that the regenerative braking torque corresponding to the engine braking torque is produced (106). In connection with the regenerative braking torque corresponding to the engine braking torque, the vehicle drivability can be improved.

### SUMMARY OF THE INVENTION

One object of the present invention is to provide a new and advantageous method for comfortable and/or fuel-efficient forward travel of a motor vehicle. Another object of the invention is to provide a new and advantageous device and a new and advantageous computer program for comfortable and/or fuel-efficient forward travel of a motor vehicle.

Yet another object of the invention is to provide a method, a device and a computer program for achieving automatic comfortable and/or fuel-efficient forward travel of a motor vehicle.

Yet another object of the invention is to provide a method, a device and a computer program for achieving comfortable and/or fuel-efficient forward travel of a motor vehicle in varying traffic situations and at varying vehicle velocities.

Certain of these objects are achieved by means of a method for comfortable and/or fuel-efficient forward travel of a motor vehicle according to claim 1, while the other objects are achieved by means of a device according to claim 13. Advantageous embodiments are described in the dependent claims.

According to one aspect of the present invention, a method for comfortable and/or fuel-efficient forward travel of a vehicle is provided, which method comprises the steps of:

- regeneratively braking said motor vehicle following detection of deactivated depression of the gas pedal; basing the regenerative braking on a continuously determined future magnitude of the resistance to forward travel. The method further comprises decreasing said regenerative braking with increasing resistance to forward travel; and increasing said regenerative braking with decreasing resistance to forward travel.

A magnitude of prevailing resistance to forward travel can be determined on the basis of at least one of the parameters comprising a slope of a surface underlying said motor vehicle, an air resistance of said motor vehicle, a rolling resistance for said motor vehicle and internal losses in a driveline of said motor vehicle.

According to one example, said prevailing resistance to forward travel can be expressed as the sum of the terms comprising slope resistance, rolling resistance, air resistance and driveline resistance. These terms are described in further detail herein.

Said prevailing resistance to forward travel can be determined in a suitable manner. Said prevailing slope resistance, prevailing rolling resistance, prevailing air resistance and prevailing driveline resistance can be determined in a suitable manner.

The magnitude of said future resistance to forward travel can be determined on the basis of at least one of the parameters comprising the future slope of the surface underlying the vehicle, future air resistance of the vehicle, future rolling resistance of the vehicle and future internal losses in the driveline of the vehicle.

According to one example, said future resistance to forward travel can be expressed as the sum of the terms comprising future slope resistance, future rolling resistance, future air resistance and future driveline resistance.

Said future resistances to forward travel can be determined in a suitable manner, for example by means of suitable calculation models, which can be kept stored in a control unit in the vehicle. Said future slope resistance, future rolling resistance, future air resistance and future driveline resistance can be determined in a suitable manner.

Regenerative braking of the vehicle can thus be advantageously made variably dependent upon said continuously determined magnitude of the resistance to forward travel. Said magnitude of the resistance to forward travel can be determined in a number of different suitable ways, with the result that the inventive method is versatile.

Said resistance to forward travel can comprise taking into account a slope of a surface underlying said motor vehicle and a prevailing mass of said motor vehicle. The method can comprise the step of continuously determining a slope of a surface underlying said motor vehicle. The method can comprise the step of continuously determining a mass of said motor vehicle. This can occur in a suitable manner, such as automatically by means of equipment in said motor vehicle, such as bellows. Said vehicle mass can be calculated by continuously measuring the prevailing pressure in bellows in said motor vehicle.

Said resistance to forward travel can comprise taking into account a prevailing rolling resistance of said motor vehicle. The method can comprise the step of:

- continuously determining a prevailing rolling resistance of said motor vehicle.

Said resistance to forward travel can comprise taking into account a prevailing air resistance acting upon said motor vehicle. The method can comprise the step of:

- continuously determining a measurement of the air resistance acting upon said motor vehicle.

The method can comprise the step of:

- determining a prevailing air resistance acting upon said motor vehicle on the basis of an aerodynamic configuration of said motor vehicle and/or a velocity of said motor vehicle and/or the effect of wind on said vehicle. The method can comprise at least one of the steps of:
- furnishing information about said aerodynamic configuration of the motor vehicle;

- continuously determining said velocity of said motor vehicle; and
- continuously determining said effect of wind on said motor vehicle.

Said resistance to forward travel can comprise taking into account internal driveline losses in said motor vehicle. Said resistance to forward travel can comprise taking into account internal driveline losses in said motor vehicle, including engine braking. The method can comprise the step of:

- continuously determining said internal driveline losses in said motor vehicle.

The method can comprise the step of:

- decreasing said regenerative braking with increasing resistance to forward travel, and vice versa.

The method can comprise the step of:

- increasing said regenerative braking with decreasing resistance to forward travel, and vice versa.

The method can comprise the step of:

- continuously determining the distance and/or magnitude of change in said continuously determined distances to a lead vehicle; and
- regeneratively braking the vehicle based on said continuously determined distance and/or magnitude of change in said continuously determined distance to a lead vehicle.

The method can comprise the step of:

- continuously determining a distance to a lead vehicle and/or a magnitude of a change in said continuously determined distance to said lead vehicle; and
- regeneratively braking said motor vehicle based on said continuously determined distance and/or said magnitude of change in said continuously determined distance to said lead vehicle.

According to one aspect of the invention a method for comfortable and/or fuel-efficient forward travel of a vehicle is achieved, which method comprises the steps of:

- regeneratively braking said vehicle;
- regeneratively braking said vehicle after following detection of deactivated depression of the gas pedal based on a continuously determined distance and/or magnitude of change in said continuously determined distance to a lead vehicle.

Said regenerative braking can occur at a suitable velocity of the vehicle. Said regenerative braking can occur at a vehicle velocity that is under 50 km/h. Said regenerative braking can occur at a vehicle velocity that is over 50 km/h. Said method is thus versatile insofar as said regenerative braking can be activated regardless of the velocity at which the vehicle is being driven.

Regenerative braking of the vehicle can thus advantageously be performed variably depending on said determined distance and/or magnitude of change in said continuously determined distance. Regenerative braking of the vehicle can thus advantageously be performed variably depending on said determined distance and/or magnitude and direction of change in said continuously determined distance. The distance and the magnitude of the change in said continuously determined distance can be measured by means of a radar device on the vehicle. An accurate determination of said distance and magnitude of change is thereby obtained.

If a lead vehicle is located in relative proximity to the vehicle itself, a relatively high braking torque can be applied. However, said braking torque is not so high that it is perceived as disturbing by a driver.

If a lead vehicle is not located in relative proximity to the vehicle itself, a relatively low braking torque can be applied. Alternatively, no additional brake torque can be applied above and beyond an active engine-braking torque.

The method according to the invention advantageously achieves lower fuel consumption in more traffic situations than do existing solutions. The proposed solution can be realized with software alone in vehicles that are equipped with a radar unit for distance measurements.

The method can further comprise the step of:

- adapting said regenerative braking to a road slope and/or vehicle mass. A versatile method is thereby achieved that is adapted to the topography in which the vehicle is being driven. Adequate adaptation to prevailing surrounding conditions is thereby advantageously achieved, which can further reduce the vehicle fuel consumption. The method can comprise the step of providing information about vehicle mass. Said information can thus be input manually to a control unit in the vehicle. According to one alternative a control system in the vehicle can, by means of suitable sensors and/or computer programs, automatically determine said information about vehicle mass.

Said regenerative braking can occur by means of an electric machine in a driveline of the vehicle. An efficient application of said braking torque is thereby achieved. Said electric machine can be controlled automatically in an operationally reliable and precise method by means of a control unit of the vehicle.

Said regenerative braking can be deactivated based on the thus continuously determined distance. Said regenerative braking can thus cease when said lead vehicle accelerates or when the vehicle itself brakes enough to achieve a sufficiently large mutual distance between the vehicles.

The method can further comprise the step of:

- deactivating said regenerative braking in connection with reactivated depression of the gas pedal . A user-friendly method is thereby achieved in which decoupling of the function occurs in an intuitive manner.

The method can further comprise the step of:

- storing energy generated by said regenerative braking. An environmentally friendly method is thereby achieved in which energy generated by said regenerative braking can be used on a later occasion, for example to propel the vehicle by means of said electric machine. Said energy can, for example, be stored in an energy storage unit. Said energy storage unit can be a suitable battery.

The method according to the invention is advantageously applicable to all vehicles that are equipped with a regenerative braking system. Said regenerative braking system can, for example, comprise any arbitrary suitable element for storing energy, such as a flywheel, pneumatic accumulator or condenser. The method is thus versatile.

The method can further comprise the step of:

- using energy generated by said regenerative braking externally relative to the vehicle driveline. Said energy can, as an alternative to being stored, be used directly to power a consumer unit, for example an AC system, or to convert energy in a low voltage system, for example 24V. Said low voltage system can be arranged so as to power lamps and fans in the vehicle. According to one embodiment, said energy can be stored intermediately in, for example, said energy storage unit before being used to power said consumer unit.

The method can be implemented in existing motor vehicles. According to one aspect of the invention, program code for performing the method according to the invention can be installed in a control unit in the vehicle during its manufacture. A buyer of the vehicle can thus be given the opportunity to choose the function of the method as an option. Alternatively, program code for performing the innovative method for comfortable and/or fuel-efficient forward travel of a motor vehicle can be installed in a control unit in the vehicle during upgrading at a service station. Said program code can be loaded into a memory in the control unit.

Said program code for comfortable and/or fuel-efficient forward travel of a motor vehicle can be updated or replaced. Furthermore, different parts of said program code for comfortable and/or fuel-efficient forward travel of a motor vehicle can be replaced independently of one another. This modular configuration is advantageous from a maintenance perspective.

According to one aspect of the present invention, a device is provided for comfortable and/or fuel-efficient forward travel of a motor vehicle, which device comprises:

- elements adapted so as to regeneratively brake said motor vehicle;
- elements adapted so as to determine whether a depression of the gas pedal in said motor vehicle is deactivated or activated; and
- elements adapted so as to regeneratively brake said motor vehicle following detection of deactivated depression of the gas pedal based on a continuously determined magnitude of resistance to forward travel.

According to one aspect of the present invention, a device is provided for comfortable and/or fuel-efficient forward travel of a motor vehicle, which device comprises:

- elements adapted so as to regeneratively brake said motor vehicle;
- elements adapted so as to determine whether a depression of the gas pedal in said motor vehicle is deactivated or activated; and
- elements adapted so as to regeneratively brake said motor vehicle following detection of deactivated depression of the gas pedal based on a continuously determined prevailing resistance to forward travel.

According to one aspect of the present invention, a device is provided for comfortable and/or fuel-efficient forward travel of a motor vehicle, which device comprises:

- elements adapted so as to regeneratively brake said motor vehicle;
- elements adapted so as to determine whether a depression of the gas pedal in said motor vehicle is deactivated or activated; and
- elements adapted so as to regeneratively brake said motor vehicle following detection of deactivated depression of the gas pedal based on a continuously determined magnitude of future resistance to forward travel.

The device can comprise elements adapted so as to determine the magnitude of said future resistance to forward travel.

The device can comprise:

- elements adapted so as to continuously determine a slope of a surface underlying said motor vehicle;
- elements adapted so as to determine a prevailing mass of said motor vehicle ; and
- elements adapted so as to determine said resistance to forward travel on the basis of said determined slope of said surface underlying said motor vehicle and said prevailing mass of said motor vehicle.

The device can comprise:

- elements adapted so as to continuously determine a prevailing rolling resistance of said motor vehicle; and
- elements adapted so as to determine said resistance to forward travel on the basis of said determined rolling resistance of said motor vehicle.

The device can comprise:

- elements adapted so as to continuously determine a prevailing air resistance acting upon said motor vehicle; and
- elements adapted so as to determine said resistance to forward travel on the basis of said determined air resistance acting upon said motor vehicle.

The device can comprise:

- elements adapted so as to determine a prevailing air resistance acting upon said motor vehicle on the basis of an aerodynamic configuration of said motor vehicle and/or a velocity of said motor vehicle and/or an effect of wind on said motor vehicle.

The device can comprise:

- elements adapted so as to continuously determine internal driveline losses in said motor vehicle; and
- elements adapted so as to determine said resistance to forward travel on the basis of said internal driveline losses in said motor vehicle.

The device can comprise:

- elements adapted so as to decrease said regenerative braking with increasing resistance to forward travel.

The device can comprise:

- elements adapted so as to increase said regenerative braking with decreasing resistance to forward travel.

The device can comprise:

- elements adapted so as to continuously determine a distance and/or magnitude of change in said continuously determined distance to a lead vehicle; and
- elements adapted so as to control the regenerative braking of the vehicle based on said continuously determined distance and/or magnitude of change in said continuously determined distance to a lead vehicle.

The device can comprise:

- elements adapted so as to continuously determine a distance to a lead vehicle and/or a magnitude of a change in said continuously determined distance to said lead vehicle; and
- elements adapted so as to control the regenerative braking of said motor vehicle based on said continuously determined distance and/or said magnitude of change in said continuously determined distance to said lead vehicle.

According to one aspect of the invention, a device for comfortable and/or fuel-saving forward travel of a motor vehicle is provided. The device comprises:

- elements for regeneratively braking said vehicle;
- elements for continuously determining a distance to a lead vehicle and/or a magnitude of change in said distance to said lead vehicle;
- elements for determining whether a depression of the gas pedal in the vehicle is deactivated or activated; and
- elements for regeneratively braking the vehicle following detection of deactivated depression of the gas pedal based on said continuously determined distance and/or magnitude of change in said continuously determined distance to a lead vehicle.

The description herein states that different elements are provided for performing a given function. The intent herein is that said elements are adapted or arranged so as to perform said function.

Said regenerative braking can occur at a suitable vehicle velocity. Said regenerative braking can occur at a vehicle velocity under 50 km/h. Said regenerative braking can occur at a vehicle velocity over 50 km/h. Said device is thus versatile insofar as said regenerative braking can be activated regardless of the velocity at which the vehicle is being driven.

According to one embodiment, a braking torque of 100 Nm can be applied in connection with said regenerative braking to an input shaft of a gearbox of the vehicle. According to one embodiment, a constant braking torque can be applied in connection with said regenerative braking. According to one embodiment, a variable braking torque can be applied in connection with said regenerative braking. According to one embodiment, a combination of a variable braking torque and a constant braking torque can be applied in connection with said regenerative braking. In this case a variable braking torque is applied bit-by-bit and a constant braking torque is applied bit-by-bit in connection with said regenerative braking. According to one exemplary embodiment, a braking torque is applied that lies within a range of 0-200 Nm or corresponds to 0-30 kW is applied. According to one exemplary embodiment, a braking torque is applied that lies within a range corresponding to 0-100 kW. According to one embodiment, a braking torque is applied that is of essentially the same order of magnitude as a combustion engine torque in the vehicle. According to one embodiment, a braking torque is applied that is roughly 50% or 100% higher than an engine braking torque in the vehicle.

The device can comprise:

- elements for adapting said regenerative braking to a underlying surface slope and/or vehicle mass.

The device can comprise:

- an electric machine in a driveline of the vehicle;
- elements for controlling said regenerative braking by means of said electric machine.

The device can comprise:

- elements for deactivating said regenerative braking based on the thus continuously determined distance.

The device can further comprise:

- elements for deactivating said regenerative braking in connection with reactivated depression of the gas pedal.

The device can further comprise:

- elements for storing energy generated by said regenerative braking.

The device can further comprise:

- elements for controlling the use of energy generated by said regenerative braking externally relative to the vehicle driveline.

According to one aspect of the invention, a motor vehicle is provided comprising a device according to any of claims 13-26. Said motor vehicle can be any of a goods vehicle, bus or car.

According to one aspect of the invention, a computer program for comfortable and/or fuel-efficient forward travel of a motor vehicle is provided, wherein said computer program comprises program code stored on a computer-readable medium for causing an electronic control unit or another computer connected to the electronic control unit to perform the steps according to any of claims 1-12.

According to one aspect of the invention, a computer program for comfortable and/or fuel-efficient forward travel of a motor vehicle is provided wherein said computer program comprises program code for causing an electronic control unit or another computer connected to the electronic control unit to perform the steps according to any of claims 1-12.

According to one aspect of the invention, a computer program product is provided comprising a program code stored on a computer-readable medium in order to perform the method steps according to any of claims 1-12 when said computer program is run on an electronic control unit or another computer connected to the electronic control unit.

Additional objects, advantages and new features of the present invention will be apparent to one skilled in the art from the following details, and by practicing the invention. While the invention is described below, it should be apparent that the invention is not limited to the specifically described details. One skilled in the art who has access to the teaching herein will recognize additional applications, modifications and incorporations in other fields, and which fall within the scope of the invention.

GENERAL DESCRIPTION OF THE DRAWINGS

For a more complete understanding of the present invention and its additional objects and advantages, reference is now made to the following detailed description, which is to be read together with the accompanying drawings, in which the same reference designations refer to the same parts in the various figures, and in which:

Figure 1 schematically illustrates a vehicle according to one embodiment of the invention;
Figure 2 schematically illustrates a subsystem of the vehicle shown in Figure 1 according to one embodiment of the invention;
Figure 3a schematically illustrates a subsystem of the vehicle shown in Figure 1 according to one embodiment of the invention;
Figure 3b schematically illustrates a diagram according to one aspect of the present invention;
Figure 3c schematically illustrates a diagram according to one aspect of the present invention;
Figure 3d schematically illustrates a diagram according to one aspect of the present invention;
Figure 3e schematically illustrates a diagram according to one aspect of the present invention;
Figure 3f schematically illustrates a diagram according to one aspect of the present invention;
Figure 3g schematically illustrates a diagram according to one aspect of the present invention;
Figure 4a schematically illustrates a flow diagram of a method according to one embodiment of the invention;
Figure 4b schematically illustrates, in greater detail, a flow diagram of a method according to one embodiment of the invention; and
Figure 5 schematically illustrates a computer according to one embodiment of the invention.

DETAILED DESCRIPTION OF THE FIGURES

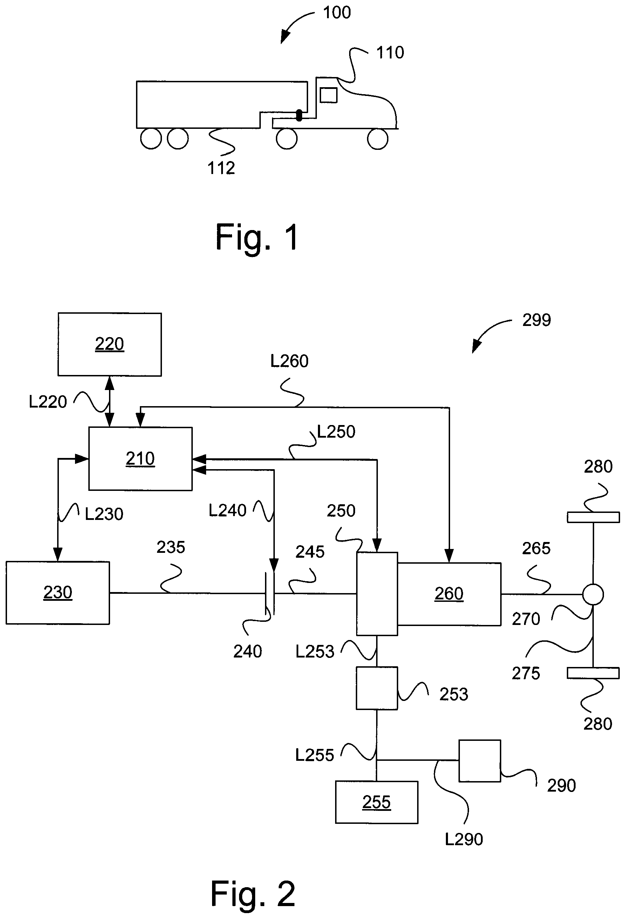

A side view of a vehicle 100 is shown with reference to Figure 1. The exemplary vehicle 100 consists of a tractor 110 and a trailer 112. The vehicle can be a heavy vehicle, such as a goods vehicle or a bus. The vehicle can alternatively be a car. The vehicle according to the invention comprises a regenerative braking system.

The term "link" refers herein to a communications link, which can be a physical line, such as an opto-electronic communication line, or a non-physical line, such as a wireless connection, for example a radio or microwave link.

The term "regenerative braking system" refers herein to a suitable regenerative braking system. Said regenerative braking system is arranged so as to be able to store supplied energy and subsequently use said stored energy in a suitable manner. A parallel hybrid system comprising an energy storage unit and an electric machine is described herein. It should be noted that this is only one example of a regenerative braking system.

The description herein states that variable regenerative braking of said vehicle 100 can be applied where it is suitable. The description herein states that said regenerative braking is adapted primarily to resistance associated with the slope of the underlying surface, rolling resistance, air resistance and resistance associated with internal driveline losses. Said regenerative braking according to the invention can be controlled on the basis of the sum of the forces that correspond to the respective resistances. These forces can be expressed in terms of corresponding braking torque, braking effect, braking power and braking deceleration. The description herein states that said resistances are expressed in terms of forces, but one skilled in the art will perceive that there are alternative ways and terms for describing the inventive idea and its implementation and realization.

A parallel hybrid system 299 of the vehicle 100 is shown with reference to Figure 2. The parallel hybrid system 299 is arranged in the tractor 110.

The parallel hybrid system 299 consists of a combustion engine 230 that has an output shaft connected by means of a clutch 240. The clutch 240 can be any arbitrary suitable clutch. The clutch can be a sliding clutch with a pressure plate and clutch plates. According to one alternative, the clutch can be implemented as a so-called lock-up function in a torque converter in the event that the vehicle transmission has an automatic gearbox. The clutch 240 is connected to an input shaft 245 of a gearbox 260. The gearbox 260 has an output shaft 265 that is connected to a transfer case 270 for transferring power to a number of drive wheels 280 via respective drive axles.

The parallel hybrid system 299 further consists of an electric machine configuration comprising an electric machine 250 that is arranged on the input shaft 245 of the gearbox 260. The electric machine 250 is electrically connected to an energy storage unit 255. According to one example, the electric machine 250 can be arranged so as to be rated at 60-120 kW. The energy storage unit 255 can be of any arbitrary suitable type. According to one example, the energy storage unit can be a battery of any arbitrary suitable type, such as a lithium ion battery. The battery can alternatively be, for example, an NiMH battery. According to another example, the energy storage unit 255 can be an electrochemical energy storage unit, such as an electrochemical condenser, a so-called SuperCap. Here said energy storage unit is exemplified by a battery of a conventional type for parallel hybrid systems.

According to one embodiment, the electric machine 250 is arranged so as to be powered by means of said energy storage unit 255 and to thereby function as a motor in the vehicle driveline in order to bring about a driving torque in the input shaft 245 of the gearbox 260. According to one embodiment, the electric machine 250 is arranged so as to function as a generator in the electric machine configuration, and to thereby charge the energy storage unit 255 during braking of the vehicle 100. Said electric machine 250 can typically function as a motor and generator in alternating fashion. During regenerative braking of the vehicle, a braking torque is applied to the input shaft 245, whereupon the energy storage unit 255 is charged.

According to this exemplary embodiment, the battery 255 is electrically connected to an electrical converter 253 by means of a lead L255. The electrical converter 253 is arranged so as to convert a DC voltage supplied from the battery via the lead L255 to a desired suitable three-phase voltage. The electrical converter 253 is arranged so as to supply said three-phase [voltage] to the electric machine 250 via a lead L253 for supplying power and running the electric machine. Said DC voltage can be a voltage of up to a number of hundred volts, such as 300 volts or 700 volts.

Said electric machine configuration comprises said electric machine 250, electrical converter 253, battery 255 and the necessary connections between them.

The electrical converter 253 is arranged in a corresponding manner so as, during regenerative braking, to convert a three-phase voltage generated by the electric machine 250 and supplied to the converter into a DC voltage. The electrical converter 253 is arranged so as to supply said DC voltage to the battery 255 via the lead L255 to charge the battery 255.

A component configuration comprising the electric machine 250, the lead L253, the electrical converter 253, the lead L255 and the energy storage unit 255 is designated herein as the electric machine configuration. It should be noted that it is possible to realize different configurations of said electric machine configuration. According to one embodiment, the energy storage unit 255 and the electrical converter 253 can be fabricated as an integrated unit that is permanently electrically connected to the electric machine 250. According to a second embodiment, the electrical converter 253 and the electric machine 250 can be fabricated as an integrated unit that is permanently electrically connected to the energy storage unit 255. According to a third embodiment, the energy storage unit 255, the electrical converter 253 and the electric machine can be fabricated as an integrated unit.

It should be noted that it is possible to realize different embodiments of the following invention.

According to one embodiment, at least one consumer unit 290 is electrically connected to an output side of the battery 255. Said at least one consumer unit 290 can be any of, for example, an AC (Air Condition[ing]) system or cabin fan. The battery 255 is arranged so as to power said at least one consumer unit 290. According to another embodiment, said parallel hybrid system lacks said consumer unit 290. Alternatively, said consumer unit is arranged so as to be powered directly by means of a different power source than said battery 255, such as the electric machine 250.

A first control unit 210 is arranged for communication with the engine 230 via a link L230. The first control unit 210 is arranged so as to control the operation of the engine 230 in accordance with stored operating routines. For example, the first control unit 210 is arranged so as to control the prevailing rpm of the engine (or torque of the output shaft) toward a desired rpm (or a desired torque of the output shaft).

The first control unit 210 is arranged for communication with the clutch 240 via a link L240. The first control unit 210 is arranged so as to control the operation of the clutch 240 in accordance with stored operating routines. For example, the first control unit 210 is arranged so as to open the clutch, slide the clutch together and close the clutch in accordance with said stored operating routines.

The first control unit 210 is arranged for communication with the electric machine 250 via a link L250. The first control unit 210 is arranged so as to control the operation of the electric machine 250 in accordance with stored operating routines. Even though the link L250 according to Figure 2 is connected to the electric machine, in practice it is connected to the electrical converter 253. In practice, the first control unit 210 is arranged so as to control the electric machine 250 by means of the electrical converter 253. For example, the first control unit 210 is arranged so as to select a direction for the electric machine 250 in accordance with said stored operating routines. This means that the first control unit 210 is arranged so as to control, by means of the electrical converter 253, the electric machine 250 to operate as a motor that brings about a driving torque in the input shaft 245 of the gearbox 260. This also means that the first control unit 210 is arranged so as, when appropriate, to control the electric machine 250 as a generator to charge the battery 255. This occurs, for example, during the regenerative braking according to the invention.

The first control unit 210 is arranged for communication with the gearbox 260 via a link L260. The first control unit 210 is arranged so as to control the operation of the gearbox 260 according to stored operating routines. For example, the first control unit 210 is arranged so as to bring about different gear settings in the gearbox, including neutral, in accordance with said stored operating routines. The gearbox can be a so-called manual gearbox, e.g. a robotized/automated manual gearbox, or an automatic gearbox.

A second system 220 is arranged for communication with the first control unit 210 via a link L220. The second control unit 220 can be detachably connected to the first control unit 210. The second control unit 220 can be a control unit external to the vehicle 100. The second control unit 220 can be arranged so as to perform the innovative method steps according to the invention. The second control unit 220 can be used to load software to the first control unit 210, particularly software for performing the innovative method. The second control unit 220 can alternatively be arranged for communication with the first control unit 210 via an internal network in the vehicle. The second control unit 220 can be arranged to as to perform essentially the same functions as the first control unit 210, such as, for example, to control the operation of the engine 230, the clutch 240, the electric machine configuration consisting of the electric machine 250, the electrical converter 253, the battery 255 and the gearbox 260. The second control unit 220 can be arranged so as to perform essentially the same functions as the first control unit 210, e.g. to regeneratively brake the vehicle following detection of deactivated depression of the gas pedal based on a continuously determined resistance to forward travel.

It should be noted that certain of the aforementioned functions can be performed by the first control unit 210, and certain of the aforementioned functions can be performed by the second control unit 220.

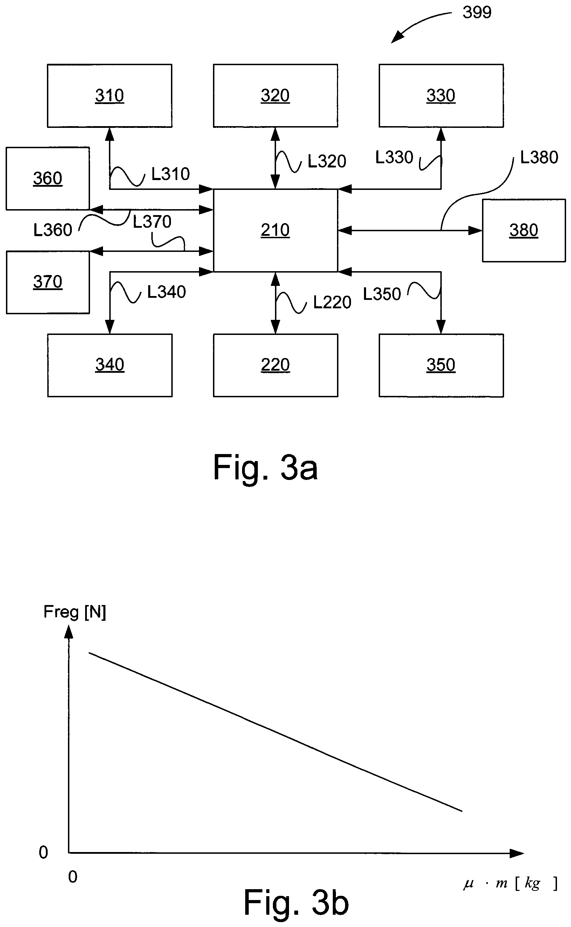

Figure 3a schematically illustrates a subsystem 399 of the vehicle 100.

The subsystem 399 can comprise a first sensor configuration 310. Said first sensor configuration 310 can comprise a radar unit for determining a distance to a lead vehicle 100. Said radar unit is arranged so as to emit a radar signal and receive a radar signal reflected by the lead vehicle in a conventional manner. The first sensor configuration 310 is arranged so as to continuously determine said distance to a lead vehicle. Said first sensor configuration 310 is arranged for communication with the first control unit 210 via a link L310. The first sensor configuration 310 is arranged so as to continuously send signals containing information about said determined distance to said lead vehicle to the first control unit 210 via said link L310.

Said first sensor configuration 310 is arranged so as to continuously determine a measurement of the magnitude of change in said continuously determined distance to a lead vehicle. Said first sensor configuration 310 is arranged so as to continuously determine a measurement of the magnitude and direction of a change in said continuously determined distance to a lead vehicle. Said first sensor configuration 310 can be arranged so as to determine said magnitude and direction of a change in said continuously determined distance by means of a time derivative of said determined distance. According to one embodiment, the first control unit 210 can be configured so as to continuously determine said magnitude and direction of a change in said continuously determined distance by means of a time derivative of said determined distance.

The subsystem 399 can comprise a second sensor configuration 320. Said second sensor configuration 320 can comprise a laser unit for determining a distance to a lead vehicle preceding the vehicle 100. Said laser unit is arranged so as to emit a laser beam and receive a laser beam reflected by the lead vehicle in a conventional manner. The second sensor configuration 320 is arranged so as to continuously determine said distance to a lead vehicle. Said second sensor configuration 320 is arranged for communication with the first control unit 210 via a link L320. The second sensor configuration 320 is arranged so as to continuously send signals containing information about said determined distance to said lead vehicle to the first control unit 210 via said link L320.

Said second sensor configuration 320 is arranged so as to continuously determine a measurement of the magnitude of a change in said continuously determined distance to a lead vehicle. Said second sensor configuration 320 is arranged so as to continuously determine a measurement of the magnitude and direction of a change in said continuously determined distance to a lead vehicle. Said second sensor configuration 320 can be arranged so as to determine said magnitude and direction of a change in said continuously determined distance by means of a time derivative of said determined distance. According to one exemplary embodiment, the first control unit 210 can be configured so as to continuously determine said magnitude and direction of a change in said continuously determined distance by means of a time derivative of said determined distance.

The subsystem 399 can comprise a camera configuration (not shown). Said camera configuration can comprise a video camera for continuously detecting a surroundings configuration in order to thereby enable determination of a distance to a lead vehicle preceding the vehicle 100. Said camera configuration is arranged for communication with the first control unit 210 via a link (not shown). Said camera configuration is arranged so as to continuously send signals concerning said detected surroundings configuration to the first control unit 210 via said link. The first control unit 210 is arranged so as to continuously determine a distance to said lead vehicle on the basis of said detected surroundings configuration. This can occur by means of an image-processing program that is stored in the first control unit 210.

The first control unit 210 is arranged so as to continuously determine a measurement of the magnitude of a change in said continuously determined distance to said lead vehicle on the basis of said detected surroundings configuration. This can occur by means of an image-processing program that is stored in the first control unit 210. According to one exemplary embodiment, the first control unit 210 can be configured so as to continuously determined said magnitude and direction of a change in said continuously determined distance by means of a time derivative of said determined distance.

The subsystem 399 can comprise a third sensor configuration 330. Said third sensor configuration 330 can comprise an acoustical unit for determining a distance to a lead vehicle preceding the vehicle 100. Said acoustical unit is arranged so as to emit an acoustic signal, such as ultrasound, and receive an acoustic signal reflected from the lead vehicle in a conventional manner. The third sensor configuration 330 is arranged so as to continuously determine said distance to a lead vehicle. Said third sensor configuration 330 is arranged for communication with the first control unit 210 via a link L330. The third sensor configuration 330 is arranged so as to continuously send signals containing information about said determined distance to said lead vehicle to the first control unit 210 via said link L330.

Said third sensor configuration 330 is arranged so as to continuously determine a measurement of the magnitude of a change in said continuously determined distance to a lead vehicle. Said third sensor configuration 330 is arranged so as to continuously determine a measurement of the magnitude and direction of a change in said continuously determined distance to a lead vehicle. Said third sensor configuration 330 can be arranged so as to determine said magnitude and distance of a change in said continuously determined distance by means of a time derivative of said determined distance. According to one exemplary embodiment, the first control unit 210 can be configured so as to continuously determine said size and direction of a change in said continuously determined distance by means of a time derivative of said determined distance.

According to one exemplary embodiment, the first control unit 210 is arranged so as to estimate a total vehicle mass, including any load. This can occur in a suitable way. According to one example, the first control unit 210 can be arranged so as to determine a said total vehicle mass on the basis of a determined prevailing air pressure in bellows in a suspension system of the vehicle. According to another example, the first control unit 210 can be arranged so as to determine said total vehicle mass on the basis of the reaction of the vehicle (acceleration, retardation) to known propulsive or braking forces in the vehicle.

A fourth sensor configuration 340 is arranged so as to continuously determine a prevailing slope of a surface underlying the vehicle 100. Said fourth sensor configuration is arranged for communication with said first control unit via a link L340. According to one example, said fourth sensor configuration 340 can be arranged so as to determine a slope of said underlying surface a given distance in front of said vehicle 100. Said fourth sensor configuration 340 can comprise a suitable gyro.

Said subsystem 399 comprises an accelerator control 350. Said accelerator control 350 can be a gas pedal. Said depression of the gas pedal 350 is signal-connected to the first control unit 210 via a link L350. A driver can manually control the depression of the gas pedal of the vehicle 100 by requesting a desired depression of the gas pedal by means of said accelerator control 350. The first control unit 210 is herein arranged so as to continuously determine whether said accelerator control is activated, which corresponds to a status when the driver is requesting a desired depression of the gas pedal. The first control unit 210 is herein arranged so as to continuously determine whether said accelerator control is deactivated, which corresponds to a status when the driver is not requesting a desired depression of the gas pedal. Said gas pedal is thereby fully released.

The subsystem 399 can comprise a fifth sensor configuration 360. Said fifth sensor configuration 360 can comprise an anemometer to determine a prevailing wind force and wind direction of the surrounding air. The fifth sensor configuration 360 is arranged so as to continuously determine an air resistance for said vehicle. Said fifth sensor configuration 360 can comprise a temperature sensor for measuring a temperature of the surrounding air. Said fifth sensor configuration 360 can comprise a pressure sensor for measuring a pressure of the surrounding air. Said fifth sensor configuration 360 can comprise a velocity sensor for determining a prevailing velocity of said vehicle.

Said fifth sensor configuration 360 is arranged for communication with the first control unit 210 via a link L360. The fifth sensor configuration 360 is arranged so as to continuously send signals containing information about the values of said determined parameters to the first control unit 210 via said link L360.

According to one exemplary embodiment, the first control unit 210 can be configured so as to continuously determine said air resistance on the basis of said determined and communicated parameter values. Information about the aerodynamic configuration of the vehicle can be stored in a memory in the first control unit 210. Said information can comprise information concerning a frontal area of said vehicle 100. Said information can comprise information as to whether said vehicle comprises a trailer. Said information can comprise suitable information concerning the vehicle 100 that is relevant for determining a prevailing air resistance for the vehicle.

The subsystem 399 can comprise a sixth sensor configuration 370. Said sixth sensor configuration 370 can comprise a underlying surface sensor for determining characteristics of an underlying surface. Said sixth sensor configuration 370 can comprise a camera with associated image-processing means. The sixth sensor configuration can be arranged so as to estimate a friction coefficient $\mu$ of said underlying surface. Consideration can be given herein to, for example, whether the underlying surface comprises snow, ice, gravel, sand, asphalt, etc. The sixth sensor configuration 370 is arranged so as to continuously determine a rolling resistance of said vehicle 100. Said sixth sensor configuration 370 can comprise a video camera for determining an estimate of said friction coefficient.

Said sixth sensor configuration 370 is arranged for communication with the first control unit 210 via a link L370. The sixth sensor configuration 370 is arranged so as to continuously send signals containing information about said underlying surface to the first control unit via said link L370.

According to one exemplary embodiment, the first control unit 210 can be configured so as to continuously determine said rolling resistance on the basis of said determined and communicated signals. Information concerning characteristics of the surface underlying the vehicle can be stored in a memory in the first control unit 210. Said information can comprise information about the type of underlying surface. Said information can comprise suitable information about the vehicle 100 that is relevant for determining a prevailing rolling resistance of the vehicle.

The subsystem 399 can comprise a seventh sensor configuration 380. Said seventh sensor configuration 380 can comprise a temperature sensor for determining a prevailing temperature of a lubricant in said engine 230 or gearbox 260. The seventh sensor configuration 370 is arranged so as to continuously determine the values corresponding to the internal losses in the vehicle driveline. Said internal losses are relatively high at relatively low temperatures of said lubricants. Said internal losses are relatively low at relatively high temperatures of said lubricants.

Said seventh sensor configuration 380 is arranged for communication with the first control unit 210 via a link L380. The seventh sensor configuration 380 is arranged so as to continuously send signals containing information concerning said temperature to the first control unit 210 via said link L380.

According to one exemplary embodiment, the first control unit 210 can be configured so as to continuously determine said internal losses on the basis of said determined temperature values and communicated signals. Information concerning characteristics of said lubricants can be stored in a memory in the first control unit 210. The first control unit 210 can also or alternatively be arranged so as to determine said internal losses of the vehicle driveline on the basis of a prevailing engine rpm or current drive mode for said engine 230. The first control unit 210 is arranged so as to determine said internal losses in a suitable manner.

The first control unit 210 is arranged so as to regeneratively brake the vehicle following detection of deactivated depression of the gas pedal based on a continuously determined distance and/or magnitude of change in said continuously determined distance to a lead vehicle. The first control unit 210 is arranged so as to adapt said regenerative braking to the roadway slope and/or vehicle mass. The first control unit 210 is arranged so as to control a regenerative braking system of a driveline of the vehicle. The first control unit 210 is arranged so as to control an electric machine in order to bring about regenerative braking of the vehicle, according to one aspect of the present invention. The first control unit 210 is arranged so as to deactivate said regenerative braking based on the thus continuously determined distance and/or magnitude of change in said continuously determined distance to a lead vehicle. The first control unit 210 is arranged so as to deactivate said regenerative braking in connection with reactivated depression of the gas pedal. The first control unit 210 is arranged so as to control the storage of energy generated by said regenerative braking. The first control unit 210 is arranged so as to control the use of energy generated by said regenerative braking externally relative to the vehicle drive line.

Figure 3b schematically illustrates a diagram according to one aspect of the present invention. Here a regenerative braking force Freg is expressed as a function of a representation of the vehicle rolling resistance Froll. Said rolling resistance Froll can be expressed herein in terms of Newtons (N). More specifically, a regenerative braking force Freg is expressed herein as a function of a rolling resistance Froll.

The rolling resistance Froll can, for example, be expressed by the following equation:

$$\text{Froll} = \text{friction coefficient } \mu \text{ x vehicle mass m x gravitational constant g}$$

i.e.

$$\text{Froll} = \mu \text{ x m x g}$$

The rolling resistance force Froll can alternatively be expressed by other suitable equations.

Said friction coefficient $\mu$ is a dimensionless unit. Said friction coefficient $\mu$ is associated with properties of a surface underlying the vehicle. Said friction coefficient $\mu$ is associated with said rolling resistance. It should be noted that said rolling resistance can be determined on the basis of parameters other than the friction coefficient $\mu$, such as properties of the vehicle tires.

A relatively high regenerative braking force is permissible for a relatively low value of said friction coefficient $\mu$. A relatively low regenerative braking force is permissible for a relatively high value of said friction coefficient $\mu$.

A relatively high regenerative braking force is permissible for a relatively low value of the vehicle mass m. A relatively low regenerative braking force is permissible for a relatively high value of said vehicle mass m.

A relatively high regenerative braking force Freg, such as a force corresponding to 50, 100 or 150 Nm in regenerative braking torque, is permissible for a relatively low value of said rolling resistance. A relatively low regenerative braking force Freg, such as a force corresponding to 10, 20 or 50 Nm in regenerative braking torque, is permissible for a relatively high value of said rolling resistance.

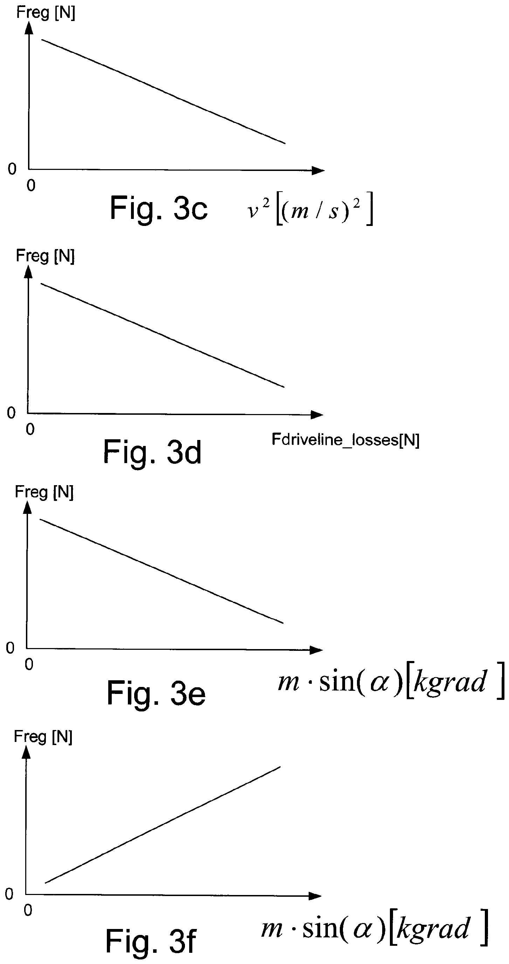

Figure 3c schematically illustrates a diagram according to one aspect of the present invention. A regenerative braking force is expressed herein as a function of the vehicle air resistance Fair. Said air resistance can be expressed herein in terms of Newtons (N). More specifically a regenerative braking force is expressed herein as a function of vehicle velocity v squared, $v^2$. Said vehicle velocity v is expressed in meters per second. Said vehicle velocity is associated with said air resistance. It should be noted that said air resistance can be determined on the basis of parameters other than the vehicle velocity, such as the aerodynamic configuration of the vehicle, wind force, wind direction, temperature of the surrounding air, density of the surrounding air and pressure of the surrounding air.

A relatively high regenerative braking force is permissible for a relatively low value of said vehicle velocity v. A relatively low regenerative braking force is permissible for a relatively high value of said vehicle velocity v.

A relatively high regenerative force Freg, e.g. a force corresponding to 50, 100 or 150 Nm in regenerative braking torque, is permissible for a relatively low value of said air resistance. A relatively low regenerative braking force Freg, e.g. a force corresponding to 10, 20 or 50 Nm in regenerative braking torque, is permissible for a relatively high value of said air resistance.

Figure 3d schematically illustrates a diagram according to one aspect of the present invention. A regenerative braking force is expressed herein as a function of losses in a driveline of said vehicle 100. Said losses Fdriveline_losses can be expressed herein in terms of Newtons (N). Said losses are also designated herein as driveline resistance Fdriveline_losses. More specifically, a regenerative braking force is expressed herein as a function of a braking torque of said engine 230. Said losses are expressed in Newtons. It should be noted that said losses can be determined on the basis of parameters other than the engine braking torque, such as a temperature of lubricant in the vehicle driveline, the engaged gear setting of said gearbox 260, or the engaged gear setting of said transfer case 270.

A relatively high regenerative braking force is permissible for a relatively low value of said engine braking torque. A relatively low regenerative braking force is permissible for a relatively high value of said engine braking torque Feng.

A relatively high regenerative braking force Freg, e.g. a force corresponding to 50, 100 or 150 Nm in regenerative braking torque, is permissible for a relatively low value of said losses. A relatively low regenerative braking force Freg, e.g. a force corresponding to 10, 20 or 50 Nm in regenerative braking torque, is permissible for a relatively high value of said losses.

Figure 3e schematically illustrates a diagram according to one aspect of the present invention. A regenerative braking force is expressed herein as a function of a slope resistance associated with a slope of the surface underlying the vehicle and a vehicle mass. According to this example, said slope is positive, i.e. the vehicle is being drive uphill. Said slope resistance can be expressed herein in terms of Newtons (N). More specifically, a regenerative braking force is expressed herein as a function of a slope $\alpha$ of said underlying surface. Said slope $\alpha$ is expressed in radians (rad). Said slope $\alpha$ is associated with said slope resistance.

Figure 3e schematically illustrates a diagram according to one aspect of the present invention. A regenerative braking force Freg is expressed herein as a function of the slope resistance of the vehicle Fslope. Said slope resistance Fslope can be expressed herein in terms of Newtons (N). More specifically, a regenerative braking force Freg is expressed herein as a function of a slope resistance Fslope.

The slope resistance force Fslope can, for example, be expressed by the following equation:

$$Fslope = \text{vehicle mass } m \times \text{gravitational constant } g \times \sin(\alpha)$$

i.e.

$$Fslope = m \times g \times \sin(\alpha)$$

The slope resistance Fslope can alternatively be expressed by other suitable equations.

A relatively high regenerative braking force is permissible for a relatively low value of said slope $\alpha$.

A relatively high regenerative braking force is permissible for a relatively low value of the vehicle mass m. A relatively low regenerative braking force is permissible for a relatively high value of said vehicle mass m.

A relatively high regenerative braking force, e.g. a force corresponding to 50, 100 or 150 Nm in regenerative braking torque, is permissible for a relatively low value of said slope resistance. A relatively low regenerative braking force Freg, e.g. a force corresponding to 10 20, or 50 Nm in regenerative braking torque, is permissible for a relatively high value of said slope resistance.

Figure 3f schematically illustrates a diagram according to one aspect of the present invention. A regenerative braking force is expressed herein as a function of a slope resistance associated with a slope of a surface underlying the vehicle. According to this example said slope is negative, i.e. the vehicle is being driven downhill. Said slope resistance can be expressed herein in terms of Newtons (N). More specifically, a regenerative braking force is expressed herein as a function of a slope $\alpha$ of said underlying surface. Said slope $\alpha$ is expressed in radians (rad). Said slope $\alpha$ is associated with said slope resistance.

Because the slope of the surface underlying the vehicle herein is negative, the slope resistance Fslope is also consequently negative, and thus constitutes a propulsive force.

Figure 3f schematically illustrates a diagram according to one aspect of the present invention. A regenerative braking force Freg is expressed herein as a function of the slope resistance Fslope of the vehicle. Said slope resistance Fslope can be expressed herein in terms of Newtons (N). More specifically, a regenerative braking force Freg is expressed herein as a function of a slope resistance Fslope.

The slope resistance Fslope can, for example, be expressed by the following equation:

$$Fslope = \text{vehicle mass } m \times \text{gravitational constant } g \times \sin(\alpha)$$

i.e.

$$Fslope = m \times g \times \sin(\alpha)$$

The slope resistance force Fslope can alternatively be expressed by other suitable equations.

A relatively low regenerative braking force is permissible for a relatively low value of said slope $\alpha$. For negative angles, a low value refers to a value near 0, i.e. where the underlying surface is fairly flat and does not slope. A relatively high regenerative braking force is permissible for a relatively high value of said slope $\alpha$.

A relatively low regenerative braking value is permissible for a relatively low value of the vehicle mass m. A relatively high regenerative braking force is permissible for a relatively high value of said vehicle mass m.

A relatively low regenerative braking force Freg, e.g. a force corresponding to 10, 20 or 50 Nm in regenerative braking torque, is permissible for a relatively low value of said slope resistance (low propulsive force). A relatively high regenerative force Freg, e.g. a force corresponding to 50, 100 or 150 Nm in regenerative braking torque, is permissible for a relatively high value of said slope resistance (high propulsive force).

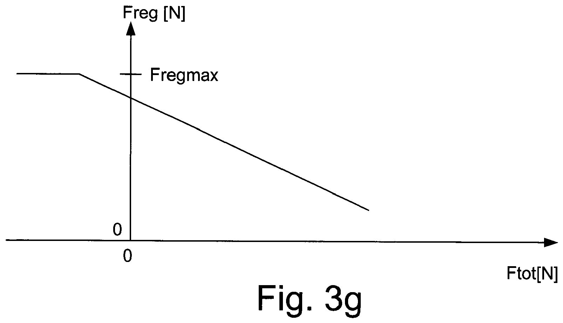

Figure 3g schematically illustrates how a regenerative braking force depends upon said resistance to forward travel, according to one aspect of the present invention. A regenerative braking force Freg is expressed herein as a function of said resistance to forward travel, designated here as Fresistancetoforwardtravel, and a nominal resistance to forward travel, designated here as Fresistancetoforwardtravel_nominal.

According to this embodiment, the regenerative braking force Freg is based on a difference Fdiff between Fresistancetoforwardtravel and Fresistancetoforward travel_nominal, according to:

$$Fdiff = Fresistancetoforwardtravel - Fresistancetoforwardtravel\_nominal$$

Fresistancetoforwardtravel can be determined according to the inventive method, e.g. as a sum of the resistances comprising slope resistance, rolling resistance, air resistance and driveline resistance.

The nominal resistance to forward travel Fresistancetoforwardtravel_nominal can be defined as the running resistance that the vehicle normally has. Fresistancetoforwardtravel_nominal can, for example, be described by:

$$\text{Fresistancetoforwardtravel\_nominal} = \text{Fair\_nominal} + \text{Froll\_nominal} + \text{Fdriveline\_losses\_nominal} + \text{Fslope\_nominal}$$

The nominal forces above can be predetermined constants that are suitable for the vehicle in question. Alternatively, at least one of said nominal forces can be suitably variable. In the event that at least one of said nominal forces is a variable, it can be described as its non-nominal counterpart is described herein. Alternatively, each respective variable nominal force can be described by another suitable equation.

A relatively high regenerative braking force is permissible for a relatively low value of said difference Fdiff between Fresistancetoforwardtravel and Fresistancetoforwardtravel_nominal. It is thereby perceived that negative values of said difference Fdiff constitute lower values than positive values of said difference Fdiff. A relatively low regenerative braking force is permissible for a relatively high value of said difference Fdiff between Fresistancetoforwardtravel and Fresistancetoforwardtravel_nominal.

A relatively high regenerative braking force Freg, e.g. a force corresponding to 50, 100 or 150 Nm in regenerative braking torque, is permissible for a relatively low value of said difference Fdiff. A relatively low regenerative braking force Freg, e.g. corresponding to 10, 20 or 50 Nm in regenerative braking force, is permissible for a relatively high value of said difference Fdiff.

According to one embodiment, a maximum level Fregmax of the braking regenerative force can be 3000N. This can correspond to a maximum deceleration of $0.3 \text{m/s}^2$, or a braking torque corresponding to 150Nm.

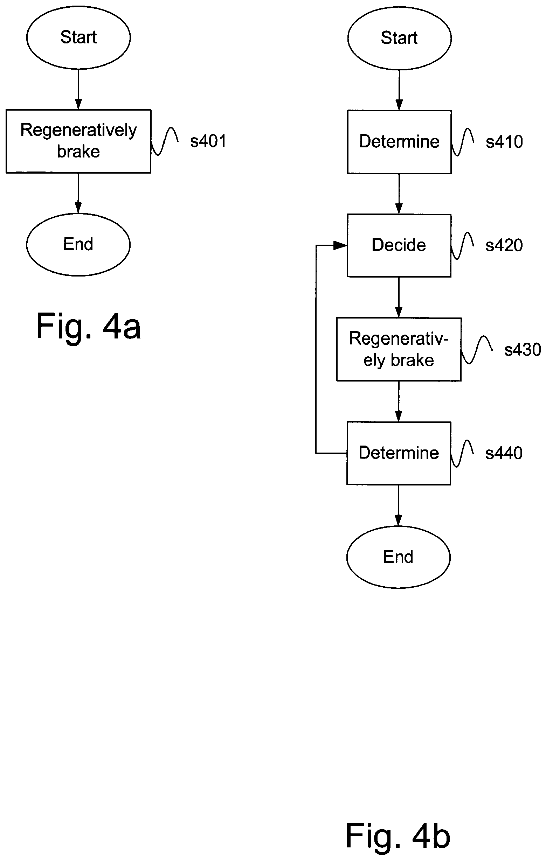

Figure 4a schematically illustrates a flow diagram of a method for comfortable and/or fuel-efficient forward travel of a motor vehicle according to one embodiment of the invention. The method comprises a first method step s401. The step s401 comprises the steps of:

- regeneratively braking said vehicle;

- regeneratively braking the vehicle following detection of deactivated depression of the gas pedal based on a continuously determined magnitude of resistance to forward travel.

The method is concluded after the step s401.

Figure 4b schematically illustrates a flow diagram of a method for comfortable and/or fuel-efficient forward travel of a motor vehicle 100 according to one embodiment of the invention.

The method comprises a first method step s410. The method step s410 comprises the step of determining whether a first state prevails. Said first state can consist of a state in which the regenerative braking according to the invention is to be applied. Said first state consists in that that said accelerator control is deactivated, e.g. that the gas pedal is completely released. Said first state can consist in that that a determined distance to a lead vehicle is below a predetermined value, e.g. 5, 10, 50 or 100 meters. Said first state can consist in that that the vehicle 100 is approaching a lead vehicle at a velocity that exceeds a predetermined value, e.g. 5 km/h. Said distance to the lead vehicle can be determined by means of said first sensor configuration 310, second sensor configuration 320 and/or third sensor configuration 330. If said first state prevails, a subsequent method step s420 is performed.

The method step s420 comprises the step of determining or deciding a resistance to forward travel of said motor vehicle. Said resistance to forward travel can be determined on the basis of a number of different parameters, such as the slope of a surface underlying the vehicle 100, an air resistance acting upon the vehicle 100, an aerodynamic configuration of the vehicle 100, a prevailing velocity of the vehicle 100, the effect of wind on the vehicle 100 or internal driveline losses in the vehicle 100.

The method step s420 can comprise the step of continuously determining the slope of a surface underlying said vehicle 100. The method step s420 can comprise the step of continuously determining a rolling resistance of said vehicle 100. The method step s420 can comprise the step of continuously determining a measurement of the air resistance acting upon the vehicle 100. The method step s420 can comprise the step of continuously determining the air resistance working upon the vehicle 100 on the basis of the aerodynamic configuration of the vehicle 100 and/or the velocity of the vehicle 100 and/or the effect of wind on the vehicle 100. The method step s420 can comprise the step or furnishing information about the aerodynamic configuration of the vehicle 100. The method step s420 can comprise the step of continuously determining the velocity v of the vehicle. The method step s420 can comprise the step of continuously determining the effect of wind on the vehicle 100. The method step s420 can comprise the step of continuously determining internal driveline losses in the vehicle 100.

The method step s420 can comprise the step of determining the roadway slope and/or mass of the vehicle 100. This can occur, for example, by means of the first control unit 210 and said fourth sensor configuration 340. After the method step s420, a subsequent method step s430 is performed.

The method step s430 comprises the step of regeneratively braking the vehicle 100 following detection of deactivated depression of the gas pedal based on a continuously determined magnitude of the resistance to forward travel. This can occur, for example, by means of said electric machine 250. Said regenerative braking can occur in a manner wherein an essentially constant braking torque is applied to the driveline of the vehicle 100. Said regenerative braking can occur in a manner wherein a varying braking torque is applied to the driveline of the vehicle 100.

The method step s430 can comprise the step of regeneratively braking the vehicle 100 following detection of deactivated depression of the gas pedal based on a continuously determined distance and/or magnitude of change in said continuously determined distance to said lead vehicle. This can occur, for example, by means of said electric machine 250. Said regenerative braking can occur in a manner in which an essentially constant braking torque is applied to the driveline of the vehicle 100. Said regenerative braking can occur in a manner where a varying braking torque is applied to the driveline of the vehicle 100.

The step s430 can comprise the step of adapting said regenerative braking to the roadway slope and/or vehicle mass.

The step s430 can comprise the step of adapting said regenerative braking to at least one of the parameters comprising the slope of a surface underlying the vehicle 100, a prevailing rolling resistance of the vehicle 100, the air resistance acting upon the vehicle 100, the aerodynamic configuration of the vehicle 100, the velocity v of the vehicle 100, the effect of wind upon the vehicle 100 and internal driveline losses in the vehicle 100. This can be carried out in real time on the basis of a continuous determination/decision of said parameter with reference to the method step s420.

According to one exemplary embodiment, a lower braking torque can be applied to the driveline of the vehicle when it has been determined that the vehicle 100 is traveling uphill. According to one exemplary embodiment, a lower braking torque can be applied to the driveline of the vehicle 100 when it is determined that the vehicle 100 is relatively light and has a relatively light load.

According to one exemplary embodiment, a higher braking torque can be applied to the driveline of the vehicle 100 when it is determined that the vehicle 100 is traveling downhill. According to one exemplary embodiment, a higher braking torque can be applied to the driveline of the vehicle 100 when it is determined that the vehicle 100 is relatively heavy and/or has a relatively heavy load.

After the method step s430, a subsequent method step s440 is performed.

The method step s440 comprises the step of determining whether a second state prevails. Said second state can consist of a state in which the regenerative braking according to the invention is not to be applied. Said second state can consist in that that said accelerator control is activated, e.g. that the gas pedal is at least partly depressed. Said second state can consist in that a determined distance to a lead vehicle exceeds a predetermined value, e.g. 5, 10, 40 or 90 meters. Said second state can consist in that the vehicle 100 is distancing itself from the lead vehicle at a velocity that exceeds a predetermined value, e.g. 5 km/h. Said distance to the lead vehicle can be determined by means of said first sensor configuration 310, second sensor configuration 320, said camera configuration and/or third sensor configuration 330. If said second state prevails, the method is concluded. If said second state does not prevail, said regenerative braking continues, at least for a predetermined period of time, i.e. the step s420 can be performed again.

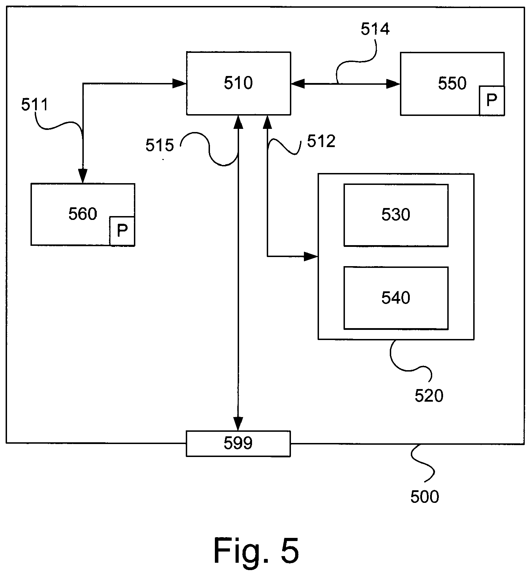

A diagram of an embodiment of a device 500 is shown with reference to Figure 5. In one embodiment, the control units 210 and 220 as described with reference to Figure 2 and Figure 3a can comprise the device 500. The device 500 comprises a non-volatile memory 520, a data-processing unit 510 and a read/write memory 550. The non-volatile memory 520 has a first memory section 530 in which a computer program, such as an operating system, is stored in order to control the function of the device 500. The device 500 further comprises a bus controller, a serial communication port, I/O elements, an A/D converter, a time and date input and transfer unit, an event counter and an interrupt controller (not shown). The non-volatile memory 520 also has a second memory section 540.

A computer program P is provided that comprises routines for continuously determining the magnitude of the resistance to forward travel. A computer program P is provided that comprises routines for regeneratively braking the vehicle 100 following detection of deactivated depression of the gas pedal based on a continuously determined magnitude of resistance to forward travel.

The computer program P can contain routines for continuously determining the slope of a surface underlying said vehicle 100. The computer program P can contain routines for continuously determining a prevailing rolling resistance of the vehicle. The computer program P can contain routines for continuously determining a measurement of the air resistance acting upon the vehicle. The computer program P can contain routines for determining the air resistance acting upon the vehicle on the basis of the aerodynamic configuration of the vehicle and/or the velocity of the vehicle and/or the effect of the wind. The computer program P can contain routines for receiving and storing data concerning the aerodynamic configuration of the vehicle. The computer program P can contain routines for continuously determining the velocity of the vehicle. The computer program P can contain routines for continuously determining the effect of wind on the vehicle. The computer program P can contain routines for continuously determining internal driveline losses in the vehicle.

The computer program P can contain routines for continuously determining a prevailing resistance to forward travel on the basis of at least one of said determined parameters, e.g. a prevailing slope of a surface underlying the vehicle 100, a prevailing vehicle mass, a prevailing rolling resistance for the vehicle 100, a prevailing air resistance acting upon the vehicle 100, the vehicle velocity v and internal driveline losses in the vehicle 100.

The computer program P can contain routines for continuously determining a prevailing resistance to forward travel on the basis of at least one of said determined resistances. According to one example, the computer program can contain routines for determining a prevailing resistance to forward travel on the basis of a total of the slope resistance, rolling resistance, air resistance and driveline resistance.

The computer program P can contain routines for continuously determining a future resistance to forward travel on the basis of at least one of the parameters comprising a future slope of a surface underlying the vehicle 100, future vehicle mass, future rolling resistance of the vehicle 100, future air resistance of the vehicle 100, future vehicle velocity and future internal driveline losses in the vehicle 100.

The computer program P can contain routines for continuously determining a future resistance to forward travel on the basis of at least one of said determined future resistances. According to one example, the computer program can contain routines for determining a future resistance to forward travel on the basis of a total of a future slope resistance, future rolling resistance, future air resistance and future driveline resistance.

The computer program P can contain routines for decreasing said regenerative braking with increasing resistance to forward travel, and vice versa.

A computer program P is provided that comprises routines for regeneratively braking the vehicle following detection of deactivated depression of the gas pedal based on a continuously determined distance and/or magnitude of change in said continuously determined distance to a lead vehicle. The computer program P can comprise routines for adapting said regenerative braking to a roadway slope and/or vehicle mass. The computer program P can comprise routines for controlling a regenerative braking system in a driveline of the vehicle. According to one aspect of the present invention, the computer program P can comprise routines for controlling an electric machine so as to achieve regenerative braking of the vehicle. The computer program P can comprise routines for deactivating said regenerative braking based on the thus continuously determined distance and/or magnitude of change in said continuously determined distance to a lead vehicle. The computer program P can comprise routines for deactivating said regenerative braking in connection with reactivated depression of the gas pedal. The computer program P can comprise routines for controlling the storage of energy generated by said regenerative braking. The computer program P can comprise routines for controlling the use of energy generated by said regenerative braking externally relative to the vehicle driveline.

The computer program P can be stored in an executable manner or in compressed form in a memory 560 and/or in a read/write memory 550.

When it is stated that the data-processing unit 510 performs a given function, it is to be understood that the data-processing unit 510 executes a certain part of the program that is stored in the memory 560, or a certain part of the program that is stored in the read/write memory 550.

The data-processing device 510 can communicate with a data port 599 via a data bus 515. The non-volatile memory 520 is intended for communication with the data-processing unit 510 via a data bus 512. The separate memory 560 is intended to communicate with the data-processing unit 510 via a data bus 511. The read/write memory 550 is intended to communicate with the data-processing 510 unit via a data bus 514. For example, the links L220, L230, L240, L250, L260, L310, L320, L330, L340, L350, L360, L370 and L380 can be connected to the data port 599 (see Figure 2 and Figure 3a). When data are received at the data port 599, they are stored temporarily in the second memory section 540. Once received input data have been stored temporarily, the data-processing unit 510 is arranged so as to execute code in a manner as described above. According to one embodiment, signals received at the data port 599 contain information as to whether an accelerator control in the vehicle is activated or deactivated. According to one embodiment, signals received at the data port 599 contain information concerning the roadway slope. According to one embodiment, signals received at the data port 599 contain information about the vehicle mass. According to one embodiment, signals received at the data port 599 contain information about a prevailing rolling resistance of the vehicle 100, and/or internal losses in a driveline of the vehicle, and/or the wind force of the surrounding air, and/or the outdoor temperature, and/or the pressure of the surrounding air, and/or the wind direction of the surrounding air, and/or the aerodynamic configuration of the vehicle, and/or the prevailing rolling resistance of the vehicle. According to one embodiment, signals received at the data port 599 contain information about a continuously determined distance to a lead vehicle. According to one embodiment, signals received at the data port 599 contain information concerning the magnitude of change in said continuously determined distance to said lead vehicle. The signals received at the data port 599 can be used by the device 500 to regeneratively brake the vehicle independent of the vehicle velocity following detection of deactivated depression of the gas pedal based on a continuously determined distance and/or magnitude of change in said continuously determined distance to a lead vehicle.

Parts of the methods described herein can be performed by the device 500 with the help of the data-processing unit 510, which runs the program stored in the memory 560 or the read/write memory 550. The methods described herein are executed when the device 500 runs the program.

**Claims**

1. A method for comfortable and/or fuel-efficient forward travel of a motor vehicle (100), comprising the steps of:

   - regeneratively braking (s430) said motor vehicle (100) following detection of deactivated depression of the gas pedal,

   **characterized by** the steps of:

   - basing the regenerative braking on a continuously determined future magnitude of the resistance to forward travel and
   - decreasing said regenerative braking (s430) with increasing resistance to forward travel; and
   - increasing said regenerative braking (s430) with decreasing resistance to forward travel.

2. A method according to claim 1, wherein said resistance to forward travel comprises taking into account a slope of a surface underlying said motor vehicle (100) and a mass of said motor vehicle (100).

3. A method according to claim 1 or 2, wherein said resistance to forward travel comprises taking into account a prevailing rolling resistance of said motor vehicle (100).

4. A method according to any of the preceding claims, wherein said resistance to forward travel comprises taking into account a prevailing air resistance acting upon said motor vehicle (100).

5. A method according to any of the preceding claims, comprising the step of:

   - determining (s420) a prevailing air resistance acting upon said motor vehicle (100), said prevailing air resistance being determined on the basis of an aerodynamic configuration of said motor vehicle (100) and/or a velocity (v) of said motor vehicle (100) and/or an effect of the wind on said motor vehicle (100).

6. A method according to any of the preceding claims, wherein said resistance to forward travel comprises taking into account internal driveline losses in motor vehicle (100).

7. A method according to any of the preceding claims, comprising the step of:

   - continuously determining (s420) the distance and/or magnitude of change in said continuously determined distance to a lead vehicle; and
   - regeneratively braking (s430) the vehicle based on said continuously determined distance and/or magnitude of change in said continuously determined distance to a lead vehicle.

8. A method according to any of the preceding claims, wherein the step of:

   - regeneratively braking (s430) said motor vehicle (100) following detection of deactivated depression of the gas pedal based on a continuously determined magnitude of resistance to forward travel comprises
   - regeneratively braking (s430) said motor vehicle (100) based on a difference Fdiff between the magnitude of said continuously determined resistance to forward travel and a nominal resistance to forward travel for the vehicle.

9. A method according to any of the preceding claims, comprising the step of:

   - adapting (s430) said regenerative braking by means of an electric machine in a driveline of said motor vehicle (100).

**10.** A method according to any of the preceding claims, further comprising the step of:

- deactivating said regenerative braking in connection with reactivated depression of the gas pedal.

**11.** A method according to any of the preceding claims, further comprising the step of:

- storing energy generated during said regenerative braking.

**12.** A method according to any of the preceding claims, further comprising the step of:

- using energy generated during said regenerative braking external to a driveline of said motor vehicle .

**13.** A device for comfortable and/or fuel-efficient forward travel of a motor vehicle (100), comprising:

- elements (210; 220; 500; 350) adapted so as to determine whether a depression of the gas pedal in said motor vehicle (100) is deactivated or activated;
- elements (210; 220; 500) adapted so as to regeneratively brake said motor vehicle (100) following detection of deactivated depression of the gas pedal, **characterized by:**

- elements (210; 220; 500) adapted to regeneratively brake said motor vehicle (100) based on a continuously determined future magnitude of the resistance to forward travel
- elements (210; 220; 500) adapted so as to decrease said regenerative braking with increasing resistance to forward travel; and
- elements (210; 220; 500) adapted so as to increase said regenerative braking with decreasing resistance to forward travel.

**14.** A device according to claim 13, comprising:

- elements (210; 220; 500; 340) adapted so as to continuously determine a slope of a surface underlying said motor vehicle (100);
- elements (210; 220; 500) adapted so as to determine a prevailing mass of said motor vehicle (100);
- elements (210; 220; 500) adapted so as to determine said resistance to forward travel on the basis of said determined slope of said surface underlying said motor vehicle (100) and said prevailing mass of said motor vehicle (100).

**15.** A device according to claim 13 or 14, comprising:

- elements (210; 220; 500; 370) adapted so as to continuously determine a prevailing rolling resistance of the vehicle; and
- elements (210; 220; 500) adapted so as to determine said resistance to forward travel on the basis of said determined rolling resistance of said motor vehicle (100).

**16.** A device according to any of claims 13-15, comprising:

- elements (210; 220; 500; 360) adapted so as to continuously determine a prevailing air resistance acting upon said motor vehicle (100); and
- elements (210; 220; 500) adapted so as to determine said resistance to forward travel on the basis of said determined air resistance acting upon said motor vehicle (100).

**17.** A device according to any of claims 13-16, comprising:

- elements (210; 220; 500; 360) adapted so as to determine a prevailing air resistance acting upon said motor vehicle (100) on the basis of an aerodynamic configuration of said motor vehicle (100) and/or a velocity (v) of said motor vehicle (100) and/or an effect of wind upon said motor vehicle (100).

**18.** A device according to any of claims 13-17, comprising:

- elements (210; 220; 500; 380) adapted so as to continuously determine internal driveline losses in said motor vehicle (100); and
- elements (210; 220; 500) adapted so as to determine said resistance to forward travel on the basis of said internal driveline losses in said motor vehicle (100).

**19.** A device according to any of claims 13-18, comprising:

- elements (210; 220; 500; 310; 320; 330) adapted so as to continuously determine the distance and/or magnitude of change in said continuously determined distance to a lead vehicle; and
- elements (210; 220; 500) adapted so as to control the regenerative braking of the vehicle based on said continuously determined distance and/or magnitude of change in said continuously determined distance to a lead vehicle.

**20.** A device according to any of claims 13-19, comprising:

- elements further adapted so as to regeneratively brake said motor vehicle (100) following detection of deactivated depression of the gas pedal based on a difference Fdiff between said continuously determined magnitude of resistance to forward travel and a nominal resistance to forward travel for the vehicle.

**21.** A device according to any of claims 13-20, comprising:

- an electric machine (250) in a driveline of said motor vehicle (100);
- elements (210; 220; 500) adapted so as to control said regenerative braking by means of said electric machine (250).

**22.** A device according to any of claims 13-21, comprising:

- elements (210; 220; 500) adapted so as to deactivate said regenerative braking based on the thus continuously determined distance.

**23.** A device according to any of claims 13-22, further comprising:

- elements (210; 220; 500) adapted so as to deactivate said regenerative braking in connection with reactivated depression of the gas pedal.

**24.** A device according to any of claims 13-23, further comprising:

- elements (210; 220; 500; 255) adapted so as to store energy generated during said regenerative braking.

**25.** A device according to any of claims 13-24, further comprising:

- elements (210; 220; 500) adapted so as to control the use of energy generated during said regenerative braking external to a driveline of the motor vehicle (100).

**26.** A motor vehicle (100; 110) comprising a device according to any of claims 13-25.

**27.** A motor vehicle (100; 110) according to claim 26, which motor vehicle is any of a goods vehicle, bus or car.

**28.** A computer program (P) for comfortable and/or fuel-efficient forward travel of a motor vehicle (100), wherein said computer program (P) comprises program code for causing an electronic control unit (210; 500) or a computer (220; 500) connected to the electronic control unit (200; 500) to perform the steps according to any of claims 1-12.

**29.** A computer program product comprising a program code stored on a computer-readable medium for performing the method steps according to any of claims 1-12 when said program code is run on an electronic control unit (210; 500) or a computer (220; 500) connected to the electronic control unit (210; 500).

**Patentansprüche**

1. Verfahren zum komfortablen und/oder kraftstoffsparenden Vorwärtsfahren eines Kraftfahrzeugs (100), das die folgenden Schritte umfasst:

   - regeneratives Bremsen (s430) des Kraftfahrzeugs (100) nach Feststellen einer deaktivierten Betätigung des Gaspedals,

   **gekennzeichnet durch** die folgenden Schritte:

   - Basieren des regenerativen Bremsens auf einer kontinuierlich bestimmten zukünftigen Größe des Widerstands beim Vorwärtsfahren und
   - Verringern des regenerativen Bremsens (s430) bei zunehmendem Widerstand beim Vorwärtsfahren und
   - Steigern des regenerativen Bremsens (s430) bei abnehmendem Widerstand beim Vorwärtsfahren.

2. Verfahren nach Anspruch 1, wobei der Widerstand beim Vorwärtsfahren das Berücksichtigen einer Neigung einer unter dem Kraftfahrzeug (100) liegenden Oberfläche und einer Masse des Kraftfahrzeugs (100) umfasst.

3. Verfahren nach Anspruch 1 oder 2, wobei der Widerstand beim Vorwärtsfahren das Berücksichtigen eines vorherrschenden Rollwiderstands des Kraftfahrzeugs (100) umfasst.

4. Verfahren nach einem der vorhergehenden Ansprüche, wobei der Widerstand beim Vorwärtsfahren das Berücksichtigen eines vorherrschenden auf das Kraftfahrzeug (100) wirkenden Luftwiderstands umfasst.

5. Verfahren nach einem der vorhergehenden Ansprüche, das den folgenden Schritt umfasst:

   - Bestimmen (s420) eines vorherrschenden auf das Kraftfahrzeug (100) wirkenden Luftwiderstands, wobei der vorherrschende Luftwiderstand auf der Grundlage einer aerodynamischen Konfiguration des Kraftfahrzeugs (100) und/oder einer Geschwindigkeit (v) des Kraftfahrzeugs (100) und/oder einer Wirkung des Windes auf das Kraftfahrzeug (100) bestimmt wird.

6. Verfahren nach einem der vorhergehenden Ansprüche, wobei der Widerstand beim Vorwärtsfahren das Berücksichtigen der internen Verluste im Antriebsstrang des Kraftfahrzeugs (100) umfasst.

7. Verfahren nach einem der vorhergehenden Ansprüche, das die folgenden Schritte umfasst:

   - kontinuierliches Bestimmen (s420) des Abstands und/oder des Ausmaßes einer Änderung des kontinuierlich bestimmten Abstands zu einem vorausfahrenden Fahrzeug und
   - regeneratives Bremsen (s430) des Fahrzeugs auf der Grundlage des kontinuierlich bestimmten Abstands und/oder der Größe einer Änderung des kontinuierlich bestimmten Abstands zu einem vorausfahrenden Fahrzeug.

8. Verfahren nach einem der vorhergehenden Ansprüche, wobei der Schritt des

   - regenerativen Bremsens (s430) des Kraftfahrzeugs (100) nach Feststellen einer deaktivierten Betätigung des Gaspedals auf der Grundlage einer kontinuierlich bestimmten Größe des Widerstands beim Vorwärtsfahren Folgendes umfasst:
   - regeneratives Bremsen (s430) des Kraftfahrzeugs (100) auf der Grundlage einer Differenz Fdiff zwischen der Größe des kontinuierlich bestimmten Widerstands beim Vorwärtsfahren und einem Nennwiderstand beim Vorwärtsfahren für das Fahrzeug.

9. Verfahren nach einem der vorhergehenden Ansprüche, das den folgenden Schritt umfasst:

   - Anpassen (s430) des regenerativen Bremsens mittels einer elektrischen Maschine in einem Antriebsstrang des Kraftfahrzeugs (100).

10. Verfahren nach einem der vorhergehenden Ansprüche, das ferner den folgenden Schritt umfasst:

- Deaktivieren des regenerativen Bremsens in Verbindung mit der reaktivierten Betätigung des Gaspedals.

11. Verfahren nach einem der vorhergehenden Ansprüche, das ferner den folgenden Schritt umfasst:

- Speichern der während des regenerativen Bremsens erzeugten Energie.

12. Verfahren nach einem der vorhergehenden Ansprüche, das ferner den folgenden Schritt umfasst:

- Nutzung der während des regenerativen Bremsens erzeugten Energie außerhalb eines Antriebsstrangs des Kraftfahrzeugs.

13. Vorrichtung zum komfortablen und/oder kraftstoffsparenden Vorwärtsfahren eines Kraftfahrzeugs (100), die Folgendes umfasst:

- Elemente (210; 220; 500; 350) zum Bestimmen, ob eine Betätigung des Gaspedals in dem Kraftfahrzeug (100) deaktiviert oder aktiviert ist
- Elemente (210; 220; 500) zum regenerativen Bremsen des Kraftfahrzeugs (100) nachdem festgestellt wird, dass eine Betätigung des Gaspedals deaktiviert ist, **gekennzeichnet durch:**

- Elemente (210; 220; 500) zum regenerativen Bremsen des Kraftfahrzeugs (100) auf der Grundlage einer kontinuierlich bestimmten zukünftigen Größe des Widerstands beim Vorwärtsfahren
- Elemente (210; 220; 500) zum Verringern des regenerativen Bremsens bei zunehmendem Widerstand beim Vorwärtsfahren und
- Elemente (210; 220; 500) zum Steigern des regenerativen Bremsens bei abnehmendem Widerstand beim Vorwärtsfahren.

14. Vorrichtung nach Anspruch 13, die Folgendes umfasst:

- Elemente (210; 220; 500; 340) zum kontinuierlichen Bestimmen einer Neigung einer unter dem Kraftfahrzeug (100) liegenden Oberfläche
- Elemente (210; 220; 500) zum Bestimmen einer vorherrschenden Masse des Kraftfahrzeugs (100)
- Elemente (210; 220; 500) zum Bestimmen des Widerstands beim Vorwärtsfahren auf der Grundlage der bestimmten Neigung der unter dem Kraftfahrzeug (100) liegenden Oberfläche und der vorherrschenden Masse des Kraftfahrzeugs (100).

15. Vorrichtung nach Anspruch 13 oder 14, die Folgendes umfasst:

- Elemente (210; 220; 500; 370) zum kontinuierlichen Bestimmen eines vorherrschenden Rollwiderstands des Fahrzeugs und
- Elemente (210; 220; 500) zum Bestimmen des Widerstands beim Vorwärtsfahren auf der Grundlage des bestimmten Rollwiderstands des Kraftfahrzeugs (100).

16. Vorrichtung nach einem der Ansprüche 13 bis 15, die Folgendes umfasst:

- Elemente (210; 220; 500; 360) zum kontinuierlichen Bestimmen eines vorherrschenden Luftwiderstands, der auf das Kraftfahrzeug (100) wirkt, und
- Elemente (210; 220; 500) zum Bestimmen des Widerstands beim Vorwärtsfahren auf der Grundlage des bestimmten Luftwiderstands, der auf das Kraftfahrzeug (100) wirkt.

17. Vorrichtung nach einem der Ansprüche 13 bis 16, die Folgendes umfasst:

- Elemente (210; 220; 500; 360) zum Bestimmen eines vorherrschenden auf das Kraftfahrzeug (100) wirkenden Luftwiderstands auf der Grundlage einer aerodynamischen Konfiguration des Kraftfahrzeugs (100) und/oder einer Geschwindigkeit (v) des Kraftfahrzeugs (100) und/oder einer Wirkung des Windes auf das Kraftfahrzeug (100).

18. Vorrichtung nach einem der Ansprüche 13 bis 17, die Folgendes umfasst:

- Elemente (210; 220; 500; 380) zum kontinuierlichen Bestimmen interner Verluste im Antriebsstrang des Kraftfahrzeugs (100) und
- Elemente (210; 220; 500) zum Bestimmen des Widerstands beim Vorwärtsfahren auf der Grundlage der internen Verluste im Antriebsstrang des Kraftfahrzeugs (100).

19. Vorrichtung nach einem der Ansprüche 13 bis 18, die Folgendes umfasst:

- Elemente (210; 220; 500; 310; 320; 330) zum kontinuierlichen Bestimmen des Abstands und/oder der Größe der Änderung des kontinuierlich bestimmten Abstands zu einem vorausfahrenden Fahrzeug und
- Elemente (210; 220; 500) zum Steuern des regenerativen Bremsens des Fahrzeugs auf der Grundlage des kontinuierlich bestimmten Abstands und/oder der Größe der Änderung des kontinuierlich bestimmten Abstands zu einem vorausfahrenden Fahrzeug.

20. Vorrichtung nach einem der Ansprüche 13-19, die Folgendes umfasst:

- Elemente, die ferner regeneratives Bremsen des Kraftfahrzeugs (100) durchführen, nachdem auf der Grundlage einer Differenz Fdiff zwischen der kontinuierlich bestimmten Größe des Widerstands beim Vorwärtsfahren und einem Nennwiderstand beim Vorwärtsfahren für das Fahrzeug festgestellt wird, dass eine Betätigung des Gaspedals deaktiviert ist.

21. Vorrichtung nach einem der Ansprüche 13 bis 20, die Folgendes umfasst:

- eine elektrische Maschine (250) in einem Antriebsstrang des Kraftfahrzeugs (100);
- Elemente (210; 220; 500) zum Steuern des regenerativen Bremsens mittels der elektrischen Maschine (250).

22. Vorrichtung nach einem der Ansprüche 13 bis 21, die Folgendes umfasst:

- Elemente (210; 220; 500) zum Deaktivieren des regenerativen Bremsens auf der Grundlage des auf diese Weise kontinuierlich bestimmten Abstands.

23. Vorrichtung nach einem der Ansprüche 13 bis 22, die Folgendes umfasst:

- Elemente (210; 220; 500) zum Deaktivieren des regenerativen Bremsens in Verbindung mit der reaktivierten Betätigung des Gaspedals.

24. Vorrichtung nach einem der Ansprüche 13 bis 23, die Folgendes umfasst:

- Elemente (210; 220; 500; 255) zum Speichern der während des regenerativen Bremsens erzeugten Energie.

25. Vorrichtung nach einem der Ansprüche 13 bis 24, die Folgendes umfasst:

- Elemente (210; 220; 500) zum Steuern der Nutzung der während des regenerativen Bremsens erzeugten Energie außerhalb eines Antriebsstrangs des Kraftfahrzeugs (100).

26. Kraftfahrzeug (100; 110) nach einem der Ansprüche 13 bis 25.

27. Kraftfahrzeug (100; 110) nach Anspruch 26, bei dem es sich um einen Lastkraftwagen, Bus oder Personenkraftwagen handelt.

28. Computerprogramm (P) zum komfortablen und/oder kraftstoffsparenden Vorwärtsfahren eines Kraftfahrzeugs (100), wobei das Computerprogramm (P) einen Programmcode umfasst, der eine elektronische Steuereinheit (210; 500) oder einen mit der elektronischen Steuereinheit (200; 500) verbundenen Computer (220; 500) veranlasst, die Schritte nach einem der Ansprüche 1 bis 12 auszuführen.

29. Computerprogrammprodukt mit einem auf einem computerlesbaren Medium gespeicherten Programmcode zur Durchführung der Verfahrensschritte nach einem der Ansprüche 1 bis 12, wenn der Programmcode auf einer elektronischen Steuereinheit (210; 500) oder einem mit der elektronischen Steuereinheit (210; 500) verbundenen Computer (220; 500) ausgeführt wird.

**Revendications**

1. Procédé pour un déplacement vers l'avant confortable et/ou économique en carburant d'un véhicule à moteur (100), comprenant les étapes de :

   - freinage régénératif (s430) dudit véhicule à moteur (100) suite à la détection d'une pression désactivée de la pédale d'accélérateur,

   **caractérisé par** les étapes de :

   - baser le freinage régénératif sur une amplitude future déterminée en continu de la résistance au déplacement vers l'avant et
   - diminution dudit freinage régénératif (s430) avec une résistance en augmentation au déplacement vers l'avant ; et
   - augmentation dudit freinage régénératif (s430) avec une résistance en diminution au déplacement vers l'avant.

2. Procédé selon la revendication 1, dans lequel ladite résistance au déplacement vers l'avant comprend la prise en compte d'une pente d'une surface sous-jacente audit véhicule à moteur (100) et d'une masse dudit véhicule à moteur (100).

3. Procédé selon la revendication 1 ou 2, dans lequel ladite résistance au déplacement vers l'avant comprend la prise en compte d'une résistance au roulement dominante dudit véhicule à moteur (100) .

4. Procédé selon l'une quelconque des revendications précédentes, dans lequel ladite résistance au déplacement vers l'avant comprend la prise en compte d'une résistance à l'air dominante agissant sur ledit véhicule à moteur (100).

5. Procédé selon l'une quelconque des revendications précédentes, comprenant l'étape de :

   - détermination (s420) d'une résistance à l'air dominante agissant sur ledit véhicule à moteur (100), ladite résistance à l'air dominante étant déterminée sur la base d'une configuration aérodynamique dudit véhicule à moteur (100) et/ou d'une vitesse (v) dudit véhicule à moteur (100) et/ou d'un effet du vent sur ledit véhicule à moteur (100).

6. Procédé selon l'une quelconque des revendications précédentes, dans lequel ladite résistance au déplacement vers l'avant comprend la prise en compte des pertes internes de transmission dans le véhicule à moteur (100).

7. Procédé selon l'une quelconque des revendications précédentes, comprenant l'étape de :

   - détermination en continu (s420) de la distance et/ou de l'amplitude de changement dans ladite distance déterminée en continu à un véhicule de tête ; et
   - freinage régénératif (s430) du véhicule sur la base de ladite distance déterminée en continu et/ou amplitude de changement dans ladite distance déterminée en continu par rapport à un véhicule de tête.

8. Procédé selon l'une quelconque des revendications précédentes, dans lequel l'étape de :

   - freinage régénératif (s430) dudit véhicule à moteur (100) suite à la détection d'une pression désactivée de la pédale d'accélérateur sur la base d'une amplitude de résistance déterminée en continu au déplacement vers l'avant comprend
   - le freinage régénératif (s430) dudit véhicule à moteur (100) sur la base d'une différence Fdiff entre l'amplitude de ladite résistance déterminée en continu au déplacement vers l'avant et une résistance nominale au déplacement vers l'avant pour le véhicule.

9. Procédé selon l'une quelconque des revendications précédentes, comprenant l'étape de :

   - adaptation (s430) dudit freinage régénératif au moyen d'une machine électrique dans une transmission dudit véhicule à moteur (100) .

10. Procédé selon l'une quelconque des revendications précédentes, comprenant en outre l'étape de :

- désactivation dudit freinage régénératif en liaison avec la pression réactivée de la pédale d'accélérateur.

11. Procédé selon l'une quelconque des revendications précédentes, comprenant en outre l'étape de :

- stockage de l'énergie générée pendant ledit freinage régénératif.

12. Procédé selon l'une quelconque des revendications précédentes, comprenant en outre l'étape de :

- utilisation de l'énergie générée pendant ledit freinage régénératif externe à une transmission dudit véhicule à moteur.

13. Dispositif de déplacement vers l'avant confortable et/ou économique en carburant d'un véhicule à moteur (100), comprenant :

- des éléments (210 ; 220 ; 500 ; 350) adaptés de manière à déterminer si une pression de la pédale d'accélérateur dans ledit véhicule automobile (100) est désactivée ou activée ;
- des éléments (210 ; 220 ; 500) adaptés de manière à freiner de manière régénérative ledit véhicule à moteur (100) suite à la détection d'une pression désactivée de la pédale d'accélérateur, **caractérisé par** :

- des éléments (210 ; 220 ; 500) adaptés pour freiner de manière régénérative ledit véhicule à moteur (100) sur la base d'une amplitude future déterminée en continu de la résistance au déplacement vers l'avant
- des éléments (210 ; 220 ; 500) adaptés de manière à diminuer ledit freinage régénératif avec une résistance en augmentation au déplacement vers l'avant ; et
- des éléments (210 ; 220 ; 500) adaptés de manière à augmenter ledit freinage régénératif avec une résistance en diminution au déplacement vers l'avant.

14. Dispositif selon la revendication 13, comprenant :

- des éléments (210 ; 220 ; 500 ; 340) adaptés de manière à déterminer en continu une pente d'une surface sous-jacente audit véhicule à moteur (100) ;
- des éléments (210 ; 220 ; 500) adaptés de manière à déterminer une masse dominante dudit véhicule à moteur (100) ;
- des éléments (210 ; 220 ; 500) adaptés de manière à déterminer ladite résistance au déplacement vers l'avant sur la base de ladite pente déterminée de ladite surface sous-jacente audit véhicule à moteur (100) et de ladite masse dominante dudit véhicule à moteur (100) .

15. Dispositif selon la revendication 13 ou 14, comprenant :

- des éléments (210 ; 220 ; 500 ; 370) adaptés de manière à déterminer en continu une résistance au roulement dominante du véhicule ; et
- des éléments (210 ; 220 ; 500) adaptés de manière à déterminer ladite résistance au déplacement vers l'avant sur la base de ladite résistance au roulement déterminée dudit véhicule à moteur (100).

16. Dispositif selon l'une quelconque des revendications 13 à 15, comprenant :

- des éléments (210 ; 220 ; 500 ; 360) adaptés de manière à déterminer en continu une résistance à l'air dominante agissant sur ledit véhicule à moteur (100) ; et
- des éléments (210 ; 220 ; 500) adaptés de manière à déterminer ladite résistance au déplacement vers l'avant sur la base de ladite résistance à l'air déterminée agissant sur ledit véhicule à moteur (100) .

17. Dispositif selon l'une quelconque des revendications 13 à 16, comprenant :

- des éléments (210 ; 220 ; 500 ; 360) adaptés de manière à déterminer une résistance à l'air dominante agissant sur ledit véhicule à moteur (100) sur la base d'une configuration aérodynamique dudit véhicule à moteur (100) et/ou d'une vitesse (v) dudit véhicule à moteur (100) et/ou d'un effet du vent sur ledit véhicule à moteur (100).

18. Dispositif selon l'une quelconque des revendications 13 à 17, comprenant :

- des éléments (210 ; 220 ; 500 ; 380) adaptés de manière à déterminer en continu les pertes internes de transmission dans ledit véhicule à moteur (100) ; et
- des éléments (210 ; 220 ; 500) adaptés de manière à déterminer ladite résistance au déplacement vers l'avant sur la base desdites pertes de transmission interne dans ledit véhicule à moteur (100).

19. Dispositif selon l'une quelconque des revendications 13 à 18, comprenant :

- des éléments (210 ; 220 ; 500 ; 310 ; 320 ; 330) adaptés de manière à déterminer en continu la distance et/ou l'amplitude de changement dans ladite distance déterminée en continu par rapport à un véhicule de tête ; et
- des éléments (210 ; 220 ; 500) adaptés de manière à commander le freinage régénératif du véhicule sur la base de ladite distance déterminée en continu et/ou amplitude de changement dans ladite distance déterminée en continu par rapport à un véhicule de tête.

20. Dispositif selon l'une quelconque des revendications 13 à 19, comprenant :

- des éléments adaptés en outre de manière à freiner de manière régénérative ledit véhicule à moteur (100) suite à la détection d'une pression désactivée de la pédale d'accélérateur sur la base d'une différence Fdiff entre ladite amplitude de résistance déterminée en continu au déplacement vers l'avant et une résistance nominale au déplacement vers l'avant pour le véhicule.

21. Dispositif selon l'une quelconque des revendications 13 à 20, comprenant :

- une machine électrique (250) dans une transmission dudit véhicule à moteur (100) ;
- des éléments (210 ; 220 ; 500) adaptés de manière à commander ledit freinage régénératif au moyen de ladite machine électrique (250) .

22. Dispositif selon l'une quelconque des revendications 13 à 21, comprenant :

- des éléments (210 ; 220 ; 500) adaptés de manière à désactiver ledit freinage régénératif sur la base de la distance ainsi déterminée en continu.

23. Dispositif selon l'une quelconque des revendications 13 à 22, comprenant en outre :

- des éléments (210 ; 220 ; 500) adaptés de manière à désactiver ledit freinage régénératif en liaison avec la pression réactivé de la pédale d'accélérateur.

24. Dispositif selon l'une quelconque des revendications 13 à 23, comprenant en outre :

- des éléments (210 ; 220 ; 500 ; 255) adaptés de manière à stocker l'énergie générée pendant ledit freinage régénératif.

25. Dispositif selon l'une quelconque des revendications 13 à 24, comprenant en outre :

- des éléments (210 ; 220 ; 500) adaptés de manière à commander l'utilisation de l'énergie générée pendant ledit freinage régénératif externe à une transmission du véhicule automobile (100) .

26. Véhicule à moteur (100 ; 110) comprenant un dispositif selon l'une quelconque des revendications 13 à 25.

27. Véhicule à moteur (100 ; 110) selon la revendication 26, lequel véhicule à moteur est l'un quelconque parmi un véhicule utilitaire, un autobus ou une voiture.

28. Programme informatique (P) pour un déplacement vers l'avant confortable et/ou économique en carburant d'un véhicule à moteur (100), dans lequel ledit programme informatique (P) comprend un code de programme destiné à amener une unité de commande électronique (210 ; 500) ou un ordinateur (220 ; 500) connecté à l'unité de commande électronique (200 ; 500) à réaliser les étapes selon l'une quelconque des revendications 1 à 12.

29. Produit de programme informatique comprenant un code de programme stocké sur un support lisible par ordinateur pour la réalisation des étapes du procédé selon l'une quelconque des revendications 1 à 12 lorsque ledit code de programme est exécuté sur une unité de commande électronique (210 ; 500) ou un ordinateur (220 ; 500) connecté à l'unité de commande électronique (210 ; 500) .

Fig. 1

Fig. 2

399

| | | |
|---|---|---|
| 310 | 320 | 330 |

L310  L320  L330  L380

| 360 |
|---|
| 210 |
| 380 |

L360  L370

| 370 |
|---|

L340  L220  L350

| | | |
|---|---|---|
| 340 | 220 | 350 |

## Fig. 3a

Freg [N]

0

0
$\mu \cdot m$ [ kg ]

## Fig. 3b

Fig. 3c   $v^2\left[(m/s)^2\right]$

Fdriveline_losses[N]

Fig. 3d

Fig. 3e   $m \cdot \sin(\alpha)\left[kgrad\right]$

Fig. 3f   $m \cdot \sin(\alpha)\left[kgrad\right]$

Freg [N]

┼ Fregmax

0

0

Ftot[N]

Fig. 3g

Fig. 4a

Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8027773 B
- US 6378636 B
- EP 0903258 A
- EP 0754588 A